# EUROPEAN PATENT SPECIFICATION

(11) **EP 0 520 035 B1**
(45) Date of publication and mention of the grant of the patent: **14.07.1999**
(21) Application number: 91907349.4
(22) Date of filing: 13.03.1991
(51) Int. Cl.: C08L 7/00, C08L 53/02

(54) **PRESSURE-SENSITIVE ADHESIVES BASED ON PREFERENTIALLY TACKIFIED IMMISCIBLE ELASTOMERS**
DRUCKEMPFINDLICHE KLEBEMITTEL AUF DER GRUNDLAGE VON VORZUGSWEISE KLEBRIGGEMACHTEN NICHTMISCHBAREN ELASTOMEREN
ADHESIFS SENSIBLES A LA PRESSION BASES SUR DES ELASTOMERES IMMISCIBLES A ETAT COLLANT PREFERENTIEL

(30) Priority: 14.03.1990 US 493365
(43) Date of publication of application: 30.12.1992
(60) Divisional application: 98204210.3
(73) Proprietor: AVERY DENNISON CORPORATION, Pasadena, CA 91109 (US)
(72) Inventor: SASAKI, Yukihiko, Claremont, CA 91711 (US); ERCILLO, Jesse, Covina, CA 91722 (US)
(74) Representative: Kirkham, Nicholas Andrew
(86) International application number: US9101703
(87) International publication number: WO9113935

(56) References cited:
- US-A- 4 104 327
- US-A- 4 288 480
- US-A- 4 325 770
- HAWLEY's CONDENSED CHEMICAL DICTIONARY, 1987, Van Nostrand Reinhold (publ.), New York, NY (US); pp. 932, 938
- Irving SKEIST, "Handbook of Adhesives", 3rd ed., 1990, Van Nostrand Reinhold (publ.), New York, NY (US); pp. 645-647

## Description

### Field of the Invention

The present invention is directed to elastomer or rubber based pressure-sensitive adhesive compositions used in label and tape manufacture.

### Background of the Invention

During label manufacture, a laminate of a face stock, pressure-sensitive adhesive layer and a release liner is passed through apparatus which convert the laminate to yield commercially useful labels and label stock. The processes involved in the converting operation include printing, die cutting and matrix stripping to leave labels on a release liner, butt cutting of labels to the release liner, marginal hole punching, perforating, fan folding, guillotining and the like.

Die and butt cutting involve cutting of the laminate to the face of the release liner. Other procedures involve cutting clean through the label laminate and include hole punching, perforating and guillotining.

The cost of converting a laminate into a finished product is a function of the speed at which the various processing operations occur. While the nature of all layers of the laminate can impact cost of convertibility, the adhesive layer has been the greatest limiting factor in ease and cost of convertibility. This is in consequence of its viscoelastic nature which hampers precise and clean penetration of a die in die cutting operations and promotes adherence to cutting blades and the like in cutting operations. Stringiness of the adhesive also impacts matrix stripping operations which follow die cutting operations.

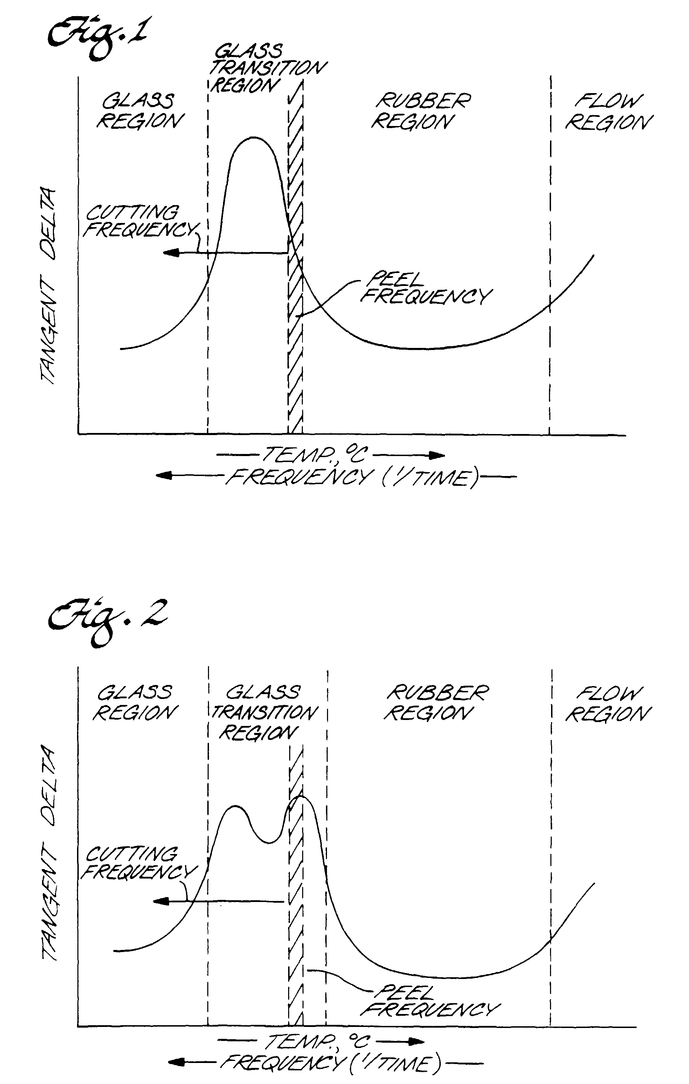

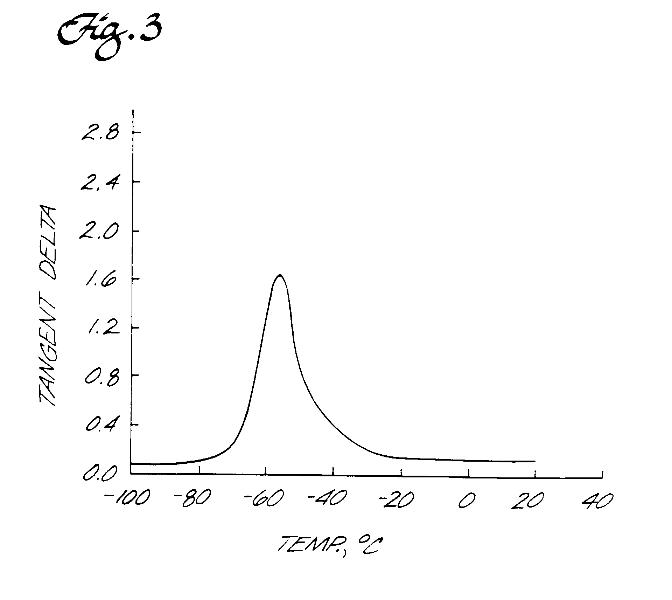

Achieving good convertibility does not, by necessity, coincide with achieving excellent adhesive performance. Adhesives must be formulated to fit needs and important properties include peel adhesion, tack, shear, viscosity at various temperatures and the like. Good general purpose adhesives may exhibit poor convertibility simply because the adhesive is difficult to cleanly cut. Such an adhesive may stick to a die or blade. In label manufacture, die cutting and matrix stripping operations by necessity occur at a variety of speeds in the range of 0 to 300 meters per minute. Within the range, an adhesive may provide regions where a matrix will break despite the fact that successful matrix stripping can occur at speeds on either side of the region. One goal is to provide adhesive systems wherein the adhesive can be cleanly cut and the matrix stripped over the entire range of operating speeds, as shown as a cutting frequency in attached FIGS. 1 and 2.

Natural and synthetic elastomers containing polybutadiene segments and polyisoprene segments are not miscible with each other. It is known in the art, however, to mix immiscible elastomeric polymers based on polybutadiene and polyisoprene. Homopolymers are more difficult to employ than block copolymers. With block copolymers, while the midblocks are immiscible, the end blocks of polystyrene form one common domain making the mixture stable without major problems of incompatibility such as separation of phases with time.

Additives to mixtures based on polyisoprene and polybutadiene vary in their compatibility with the polybutadiene or polyisoprene portions of the elastomer. While preferentially soluble in either the polyisoprene or the polybutadiene, normally there is some degree of compatibility with both components. Of the additives, those which tend to have no impact or increase glass transition temperature are regarded in the art as tackifiers and those which tend to lower glass transition temperature as plasticizers. Additives may be preferentially soluble in the polystyrene portion and may act as a reinforcing agent.

U.S. Patent No. 4,125,665 to Bemmels, et al. and U.S. Patent No. 4,288,480 are directed to a pressure-sensitive adhesive for use as a sealing tape in applications such as closure for juice and beverage cans having a top with a preformed aperture for liquid dispensing. The pressure-sensitive adhesive layer contains a relatively high melting point tackifier resin and a relatively low molecular weight styrene block associating bonding resin. Example 2 in Table A of the '665 patent discloses a mixture of Kraton 1107, a styrene-isoprene-styrene (SIS)/styrene-isoprene (SI) block copolymer and Kraton 1102, a styrene butadiene (SB)/ styrene-butadiene-styrene (SBS) block copolymer, both manufactured by Shell, along with Wingtack 95, a C₅ or C₆ normally solid tackifier as taught in U.S. Patent No. 3,577,398 and a styrene block associating bonding resin. In the absence of the styrene block associating bonding resin, the mixture displayed, according to the patentees, poor adhesion to steel and the addition of the styrene associating material was necessary to overcome the deficiency.

U.S. Patent No. 4,080,348 to Korpman and U.S. Patent No. 4,325,770 disclose e.g. in Example 2 of Table A of US' 348 an SI block copolymer, an SBS block copolymer and, as a tackifier, Wingtack 76. The weight ratio of the butadiene containing block copolymer to the isoprene containing block copolymer is 0.25:1. We have found that such mixtures only show one glass transition temperature to be present, that being the one predominantly contributed by the isoprene containing block copolymer.

Other patents of interest are U.S. Patent No. 3,880,953 to Downey, U.S. Patent No. 3,509,239 to Tindall, U.S. Patent No. 4,060,503 to Feeney, et al. and U.S. Patent No. 3,932,328 to Korpman which employs as a hot-melt adhesive mixture SIS block copolymer tackified with a blend of normally solid and normally liquid tackifiers consisting essentially of polymerized structures derived from aliphatic dienes and mono-olefins of 5 or 6 carbon atoms (Wingtack 95 and Wingtack 10 manufactured by Goodyear); U.S. Patent No. 4,411,954 to Butch III, et al. and U.S. patent No. 4,104,327.

### Summary of the Invention

According to the present invention, there is provided an elastomer or rubber-based pressure-sensitive adhesive composition which exhibits excellent convertibility, i.e., the ability to achieve cutting of the adhesive in processing operations involving cutting through a face stock and adhesive to at least the release liner of the laminate, while at the same time providing excellent adhesive properties at both ambient and reduced temperatures.

The invention provides a pressure-sensitive adhesive comprising
a) a mixture of elastomers comprised of:
   (i) a first elastomer providing a first polymerized diene component, said first elastomer exhibiting a first glass transition temperature and selected from the group consisting of polybutadiene, styrene-butadiene block copolymers, styrene-butadiene multiarmed block copolymers, and mixtures thereof,
   (ii) a second elastomer providing a second polymerized diene component, said second elastomer exhibiting a second glass transition temperature greater than the first glass transition temperature, said second polymerized diene component being immiscible in the first polymerized diene component, said first and second elastomers being combined in a mixture wherein the dynamic mechanical spectrum of the mixture exhibits a first glass transition temperature and a first value of tangent delta which is attributed to the first polymerized diene component and a second glass transition temperature and second value of tangent delta which is attributed to the second polymerized diene component, said second glass transition temperature being higher than the first glass transition temperature; and said mixture of elastomers is combined with:
b) a tackifying system comprising at least one tackifier which is preferentially soluble in the second polymerized diene component and is present in an amount of 50 to 80% by weight of the total weight of the mixture of immiscible elastomers and tackifying system, whereby to cause the dynamic mechanical spectrum of the resultant mixture of elastomers to exhibit an increase in the second glass transition temperature and an increase in the difference between the first and second glass transition temperatures and an increase in the value of tangent delta determined at the second glass transition temperature.

These results can be obtained by combining in admixture two or more immiscible elastomers which when combined in proportion provide at least two glass transition temperatures and by the addition of one or more additives which serve to tackify the mixture and result in an increase in the difference between the two glass transition temperatures as a consequence of preferential miscibility of the tackifier in the additive elastomer having the highest glass transition temperature and an amplification of tangent delta of the elastomer having the higher glass transition temperatures. Although explained in terms of diene elastomers, the invention is contemplated to be applicable to immiscible tackifiable polymers including acrylic ester based polymers.

In a preferred aspect, the invention is based on an admixture of a first natural or synthetic elastomer providing a first polymerized diene, preferably polybutadiene, and exhibiting a first glass transition temperature and a second natural or synthetic elastomer providing a second polymerized diene component, preferably polyisoprene, and having a second glass transition temperature higher than the first. The elastomers are mixed in proportion to exhibit a dynamic mechanical spectrum (DMS), i.e., a plot of a tangent delta (the ratio of G" to G' as defined herein) against temperature, with at least two, as opposed to one, distinct peaks corresponding to glass transition temperatures of the first polymerized diene (polybutadiene) and second polymerized diene (polyisoprene) components of the immiscible blend. A tackifying system comprising at least one solid tackifier is added to increase the glass transition temperature of at least the second peak in order to increase the temperature differential between the peaks, while increasing the amplitude (tangent delta) of the second (polyisoprene) peak. Shifting at least the second peak toward ambient temperature improves ambient temperature pressure-sensitive adhesive performance. The maintenance of the first peak assures low temperature pressure-sensitive adhesive performance. Low values of tangent delta give good processability and cuttability.

The immiscible rubbers are provided in proportion of the polybutadiene containing elastomer to the polyisoprene containing elastomer from about 0.5:1 to about 5:1 and comprise from 20% to 50% by weight of the total weight of the mixture of elastomers and tackifying additive.

The tackifying system is preferentially soluble in the polyisoprene component and comprises normally solid tackifying resin, preferably based on polymerized structures derived from aliphatic dienes and mono-olefins containing 5 or 6 carbon atoms, preferably with at least 40% of the structures derived from piperylene or from piperylene and isoprene, aromatic resins which are hydrogenated to the degree that substantially all of the benzene rings are converted to cyclohexane rings, and hydrogenated polycyclic resins such as hydrogenated dicyclopentadiene resins. The additive system preferably includes a normally liquid tackifying resin which is preferentially soluble in the polyisoprene component. Other constituents of the tackifying system include rosin, rosin ester and polyterpenes which are at least partially compatible with the polyisoprene component, and plasticizing oils. The additives do not, however, limit the function of the tackifiers, namely, increasing the glass transition temperature differential between the peaks.

Presently preferred compositions are those in which the ratio of the polybutadiene-based elastomer to the polyisoprene-based elastomer is about 1.3:1 and present in about 15% to about 30% by weight based on the total composition, the balance of the composition, except for inhibitors, antioxidants and other modifiers, being of the tackifying additive.

### Brief Description of the Drawings

FIG. 1 is an idealized plot of tangent delta as a function of temperature and frequency for a tackified pressure-sensitive adhesive system based on an elastomer providing a single peak in the glass transition temperature region and also depicts regions of cutting and peel frequencies;
FIG. 2, as FIG. 1, is an idealized plot of tangent delta as a function of temperature and frequency but for a tackified pressure-sensitive adhesive based on a blend of immiscible elastomers displaying multiple (two) peaks in the glass transition region;
FIG. 3 is a plot of tangent delta as a function of temperature for a blend of a styrene-butadiene block copolymer and a styrene-isoprene-styrene/styrene-isoprene block copolymer at a relative weight ratio of about 0.4:1 wherein only one peak is shown and dominated by the presence of the polyisoprene component;
FIG. 4 is a plot of tangent delta as a function of temperature for a blend of the same styrene-butadiene block copolymer and the styrene-isoprene-styrene/ styrene-isoprene block copolymer, but at a weight ratio of 1.3:1. Two peaks are shown, the lower temperature peak for polybutadiene and the higher temperature peak for polyisoprene;
FIG. 5 is a plot of tangent delta as a function of temperature for the same blend of elastomer rubbers as FIG. 4, but tackified according to Example 14 to provide a pressure-sensitive adhesive, and illustrates the increase in the differential between the two peaks and the amplification of the peak associated with the polyisoprene component of the immiscible elastomer blend;
FIG. 6 is a plot of tangent delta as a function of temperature for the pressure-sensitive adhesive composition of Example 17 showing the differential in the two peaks as a consequence of addition of a tackifier;
FIG. 7, in contrast, is a plot of tangent delta as a function of temperature (DMS) for a pressure-sensitive adhesive but where the elastomers present, shown in Control 1, are polyisoprene-based and which shows only one peak;
FIG. 8 is a DMS plot for the same composition, properties of which are shown in Control 2, but wherein the elastomeric constituent is solely polyisoprene-based, namely Kraton 1107;
FIGS. 9, 10 and 11 are ternary diagrams based on data collected which predict, based upon regression analysis of data reported in Table 2, looptack to polyethylene at temperatures of 23°C (FIG. 9), 5°C (FIG. 10) and -5°C (FIG. 11);
FIG. 12 is a plot of predicted constant values of looptack to cardboard at 23°C as a function of composition;
FIG. 13 is a plot of predicted constant values of looptack to cardboard at 5°C as a function of composition; and
FIG. 14 is a plot of predicted constant values of 90° peel to cardboard, also as a function of composition.

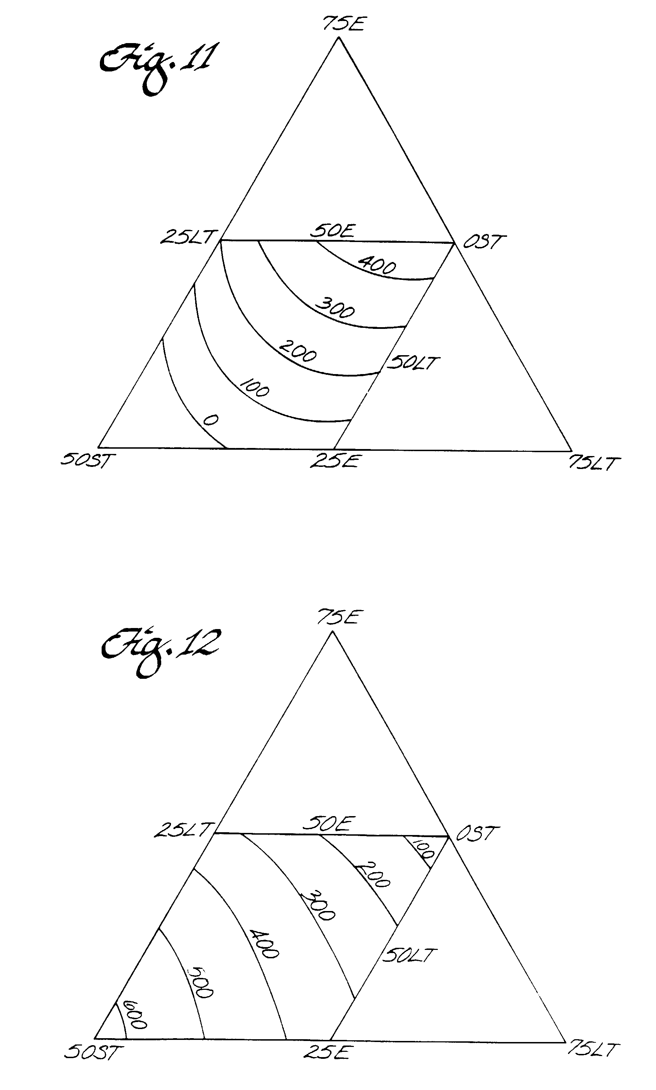

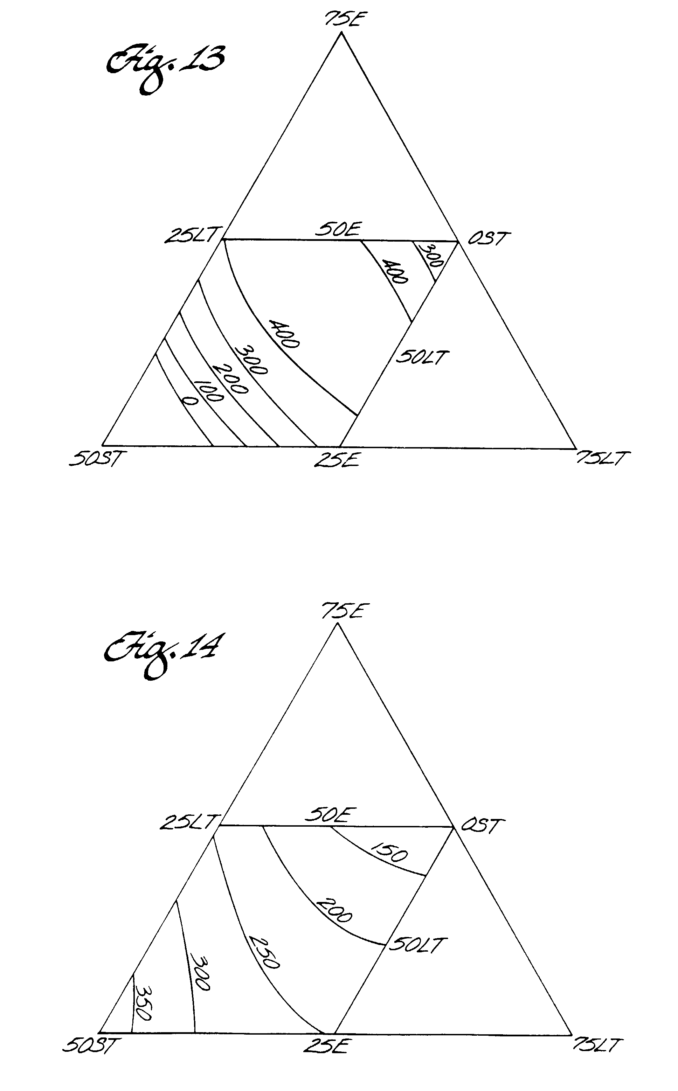

The plots of FIGS. 9-14 are based on a mixture of elastomers (E) in a proportion of 1.3 parts styrene-butadiene block copolymer to 1 part styrene-isoprene-styrene/styrene-isoprene block copolymer, a liquid tackifying additive (LT) known as Wingtack 10, and a normally solid tackifying additive (ST) known as Escorez 1310 LC.

### Detailed Description

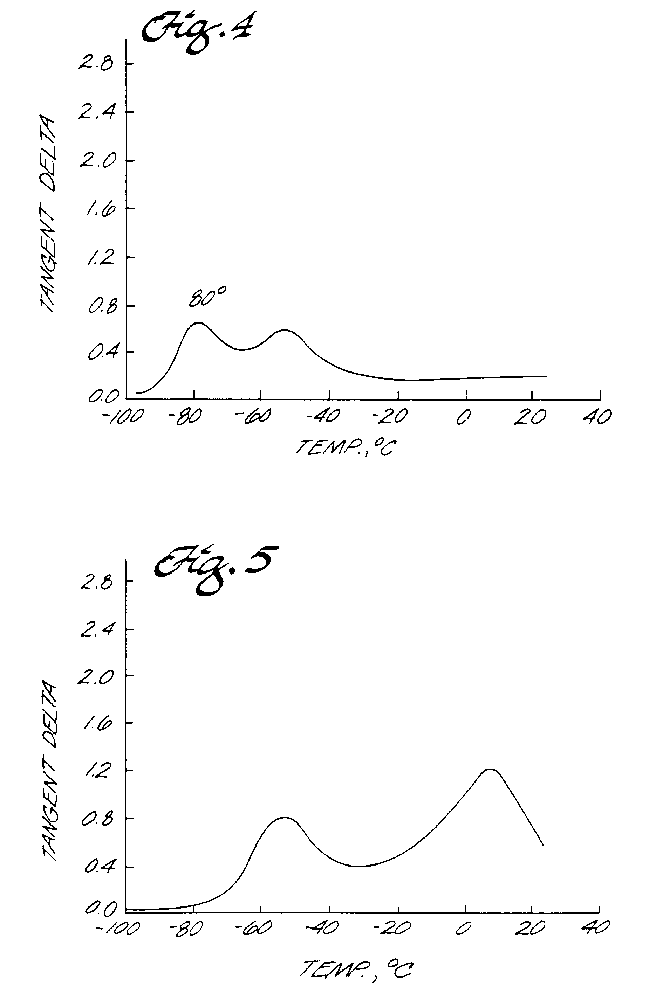

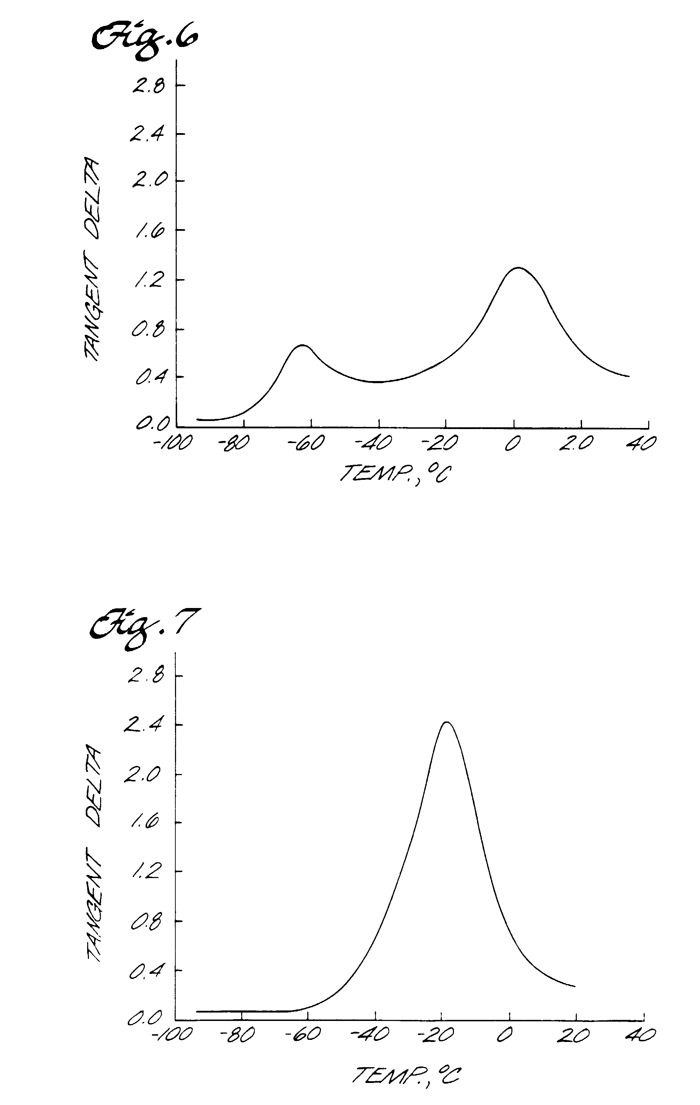

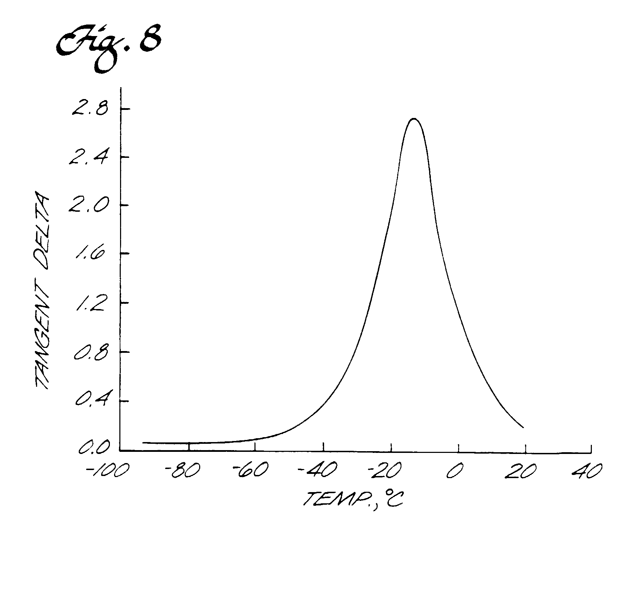

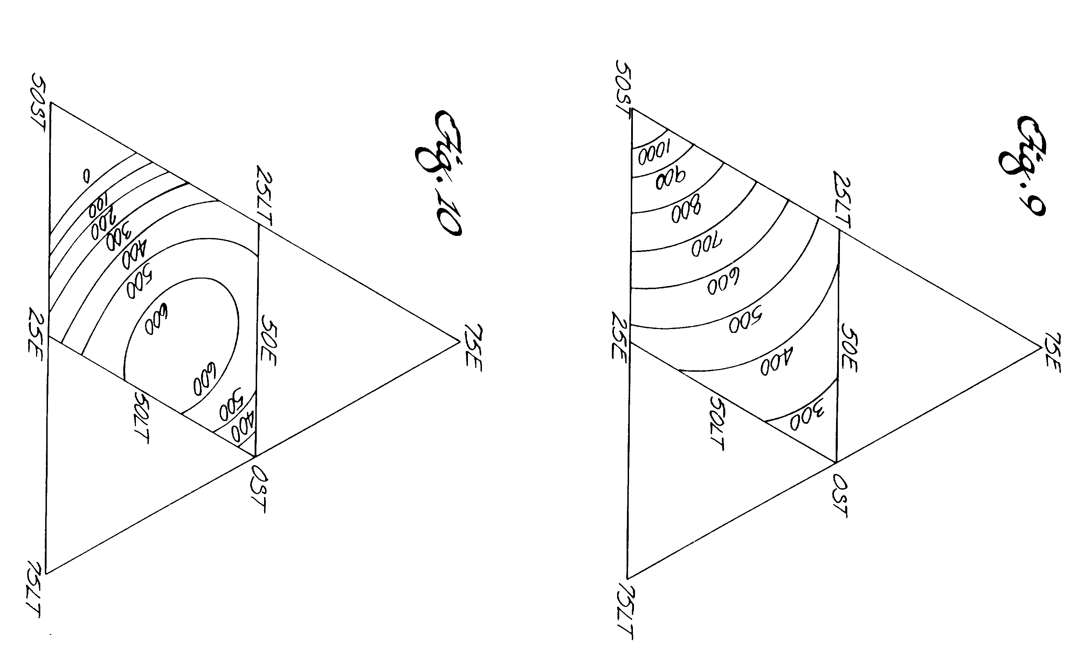

The present invention is directed to a mixture of two immiscible natural or synthetic elastomers, one based on a first polydiene, preferably polybutadiene, exhibiting a first glass transition temperature and a value of tangent delta and the other based on a second polydiene, preferably polyisoprene, exhibiting a second glass transition temperature higher than the first and a second value of tangent delta associated therewith. The two elastomers are combined in proportion whereby there is exhibited two distinct glass transition temperature peaks in a DMS curve, a plot of tangent delta as a function of temperature in °C (FIG. 4). There is provided to the composition a tackifying system which comprises tackifiers preferentially soluble in the second polydiene component which cause the temperature differential between the glass transition temperature peaks in the DMS curve to increase and the amplitude of the tangent delta for the second glass transition temperature to also increase (FIGS. 5 and 6). The net result is to provide a pressure-sensitive adhesive composition exhibiting improved conversion as seen in ability to cut the adhesive and, because of tangent delta peaks at low temperature approaching ambient, respective excellent low and ambient temperature pressure-sensitive adhesive performance.

With reference to FIG. 1, in a system based on a single uncross-linked elastomer or rubber, one finds a peak in a plot of tangent delta, the ratio of loss modulus (G") to the storage modulus (G'), as a function of temperature in °C measured at the frequency of 10 radians/second. This peak is attributed to the transition from the glassy state to the rubbery state (glass transition).

FIGS. 1 and 2 could be plotted as a function of temperature or frequency (1/time). By the time temperature superposition principle, increasing temperature is equivalent to decreasing frequency. Tangent delta is preferably as low as possible for good processability, in particular cutting, the cutting frequency region indicated in FIGS. 1 and 2, which frequency is above peel frequency in the transition between the glassy region and the rubbery region. On the other hand, for good pressure-sensitive adhesive performance (peel adhesion), tangent delta in the transition region should be high corresponding to peel frequency (10 radians/second as shown in FIG. 1.

As shown in FIG. 2, this invention is directed to modification of the transition region to obtain, as explained, the best compromise of good adhesion and good processability (cutting) by having two or more glass transition peaks in a broadened transition region.

As illustrated in FIGS. 3 to 8, by "dynamic mechanical spectrum" (DMS) there is meant a plot of tangent delta, the ratio of loss modulus (G") to storage modulus (G'), as a function of temperature as measured by placing an approximation 1-2 mm thick sample between two parallel plates of a Rheometrics instrument (Model RMS-800 manufactured and sold by Rheometrics, Inc., Piscataway, New Jersey), and oscillating the plates relative to each other at 10 radians per second. Measurements are made on a continuous basis and tangent delta is computed as a function of temperature in degrees centigrade. Storage modulus (G') is a measure of elasticity and loss modulus (G") is a measure of the amount of energy lost as heat or sound and, in the case of peeling the pressure-sensitive adhesives, can be correlated to the amount of energy dissipated in peeling the viscoelastic polymeric material from a substrate.

As used herein, "glass transition temperature" is the temperature at which a polymerized segment changes from a glassy to a rubbery state. Sequences of concern have a glass transition temperature below about 50°C. With reference to FIG. 4, the glass transition temperature of polybutadiene is about -80°C and of polyisoprene is about -54°C. A polystyrene block also has a glass transition temperature at about 80°C and with reference to FIGS. 1 and 2 is in the flow region.

FIG. 3 is a plot of tangent delta as a function of temperature for a styrene-butadiene block copolymer (Solprene 1205) and a styrene-isoprene-styrene/styrene-isoprene block copolymer blend (Kraton 1112) at a weight ratio of 0.4 to 1. There is shown thereon the single peak is dominated by the polyisoprene segment. High peak tangent delta is adverse to processability.

FIG. 4 illustrates the dual peaks provided by the same mixture of elastomers, but in proportions of about 1.3 to 1 as is preferred in the instant invention. The reduction in peak tangent delta improves processability. As formulated, this mixture is not a pressure sensitive adhesive.

FIG. 5 illustrates the DMS curve for a tackified composition based on about 38% by weight of the mixture of elastomers, the DMS of which is plotted in FIG. 4, and about 62% by weight of a tackifier system based on Escorez 1310 LC (a normally solid tackifier manufactured and sold by Exxon) and Wingtack 10 (a normally liquid tackifier manufactured and sold by Goodyear). While there is an increase in the tangent delta for the second or higher temperature peak exhibiting some loss in processability, tangent deltas are still lower than the single peak of FIGS. 3, 7 and 8 exhibiting on a relative basis better processability. The polyisoprene peak of FIG. 5 has been shifted to a higher temperature (about 8°C). This shift is due to the preferential solubility of the tackifier in the polyisoprene resulting in an increase in glass transition temperature greater than the increase in glass transition temperature of the polybutadiene peak. The shift of the polyisoprene peak towards ambient temperature establishes improved pressure-sensitive adhesive properties at ambient temperature (about 20° to 23°C), while the distinct existence of the polybutadiene peak is indicative of providing improved low temperature pressure-sensitive adhesive properties.

Systems where the elastomeric constituents are immiscible but form a single peak (FIG. 3) are not functional for the purposes of the instant invention, except when combined with another immiscible constituent which forms a second DMS peak. Immiscible systems which form two peaks are systems where the peaks are separately represented by contributions of the polyisoprene and polybutadiene components (FIG. 4) and where, in accordance with the instant invention, the temperature differential between the peaks is increased by the addition of a tackifier (FIGS. 5 and 6).

Also not within the scope of the instant invention are systems based on a single polydiene (polyisoprene block copolymers) which also form a single peak (FIGS. 7 and 8).

As used herein, "tackifier system" consists of tackifiers which are preferentially miscible with the polydiene having the highest glass transition temperature (polyisoprene) and serves by preferential tackification to increase differential between the peaks and amplify the peak of the highest glass transition temperature. The tackifier system may also include normally liquid and solid tackifiers which leave unchanged or increase the glass transition temperature of the polyisoprene block and plasticizer oils which lower the glass transition temperature of the polyisoprene segment. Tackifier systems used in the practice of the instant invention, while including conventional tackifiers and plasticizer oils, must have the net effect of being preferentially soluble in the polyisoprene block so as to preferentially increase the difference between the glass transition temperature of the polyisoprene block component relative to the polybutadiene block component, with an increase (amplification) of the tangent delta of the polyisoprene peaks of the pressure-sensitive adhesive composition.

The polymers used in formulating the pressure-sensitive adhesives of this invention are based on natural and/or synthetic elastomeric polymers. Useful are AB, ABA and (AB)ₓ block copolymers wherein x has a value of 3 or more and wherein A is a block comprising at least one monoalkenyl arene, preferably styrene, alpha methyl styrene, vinyl toluene and the like, and B is an elastomeric conjugated diene block, preferably a polybutadiene or a polyisoprene block. Preferably at least one is based on polybutadiene blocks and one other is based on polyisoprene blocks. These include, but are not limited to, homopolymers, block, random or multiarmed copolymers, and mixtures thereof. Among the useful elastomeric polymers there may be mentioned natural rubber (polyisoprene), polybutadiene, synthetic polyisoprene, random styrene-butadiene polymers, styrene-butadiene (SB) block copolymers, multiarmed and repeating (SB) copolymers, styrene-butadiene-styrene (SBS) block copolymers, styrene-isoprene (SI) block copolymers, styrene-isoprene-styrene (SIS) block copolymers, multiarmed styrene-isoprene (SI)ₓ block copolymers, and the like. It will be understood that random copolymers may also be used and can reverse the diene preferentially tackified so long as the glass transition temperature of the polymer exhibiting the highest glass transition temperature is increased relative to the polymer of lower glass transition temperature.

Commercial elastomeric polymers used include linear SIS/SI block copolymers known as Kraton D-1107 and D-1112, SBS/SB block copolymers known as Kraton D-1101, D-1102 and DX-1300, and an (SI)ₓ block copolymer known as Kraton D-1320X, all manufactured and sold by Shell Chemical Company, and an SB block copolymer known as Solprene 1205 manufactured and sold by Housemex, Inc. As indicated, in many of the SIS or SBS block copolymers, there are respectively present SI or SB components.

Other elastomers, such as the ethylene-propylene diene rubbers, styrene-ethylene/butylene, styrene block copolymers, styrene-ethylene/propylene-styrene block copolymers and the like, may also be used.

The weight ratio of the polybutadiene containing constituents of the mixture to the polyisoprene constituents of the mixture are such that there are provided two peaks on the DMS curve for the mixture as illustrated in FIG. 4. Generally, weight ratios range from about 0.5:1 upward. Compositions contemplated to be used in accordance with the instant invention are combined in ratio of about 0.5:1 to about 5:1, preferably from about 1:1 to about 1.5:1, and most preferably from about 1.3:1.

Tackifier additives for the polyisoprene component are preferably obtained by the polymerization of a stream of aliphatic petroleum derivatives in the form of dienes and mono-olefins containing 5 or 6 carbon atoms generally in accordance with the teachings of U.S. Patent Nos. 3,577,398 to Pace and 3,692,756 to St. Cyr. The resultant hydrocarbons range from materials which are normally liquid at room temperature to those which are normally solid at room temperature and typically contain 40% or more by weight polymerized dienes. The dienes are typically piperylene and/or isoprene. They are sold by the Chemical Division of Goodyear Tire and Rubber Company as the Wingtack family of resins with the numerical designation being the softening point, e.g., Wingtack 95 which is normally a solid resin having a softening point of about 95°C and Wingtack 10 which is normally a liquid resin having a softening point of about 10°C.

Other normally solid tackifiers are Escorez 1310 LC manufactured by Exxon and Piccotac 95 manufactured by Hercules.

Other additives which serve a tackifier function include hydrogenated aromatic resins wherein a very substantial portion, if not all, of the benzene rings are converted to cyclohexane rings (for example, the Regalrez family of resins manufactured by Hercules such as Regalrez 1018, 1033, 1065, 1078 and 1126, and Regalite R-100, and the Arkon family of resins from Arakwa Chemical such as Arkon P-85, P-100, P-115 and P-125), hydrogenated polycyclic resins (typically dicyclopentadiene resins such as Escorez 5300, 5320, 5340 and 5380 manufactured by Exxon) and the like.

There can be also added rosins, rosin esters, polyterpenes and other tackifiers which are compatible to some degree with the polyisoprene and polybutadiene phases. Other additives include plasticizer oils such as Shellflex 371 manufactured by Shell and Kaydol mineral oil manufactured by Witco which are soluble in both the polyisoprene and polybutadiene phases.

The tackifier system is present in an amount, based on the total weight of tackifier system and elastomers, of from 50% to 80% by weight, preferably from 50% to 70% by weight, more preferably from 60% to 70% by weight. The presently preferred ratio is 38% by weight elastomer and 62% by weight tackifying resin additive, the resin additive preferably being a mixture of a normally solid tackifier such as Wingtack 95 or Escorez 1310 LC and a normally liquid tackifier such as Wingtack 10 or a plasticizer oil such as Shellflex 371. Polystyrene reinforcing additives may be present but are not required.

While, as will be seen, the pressure-sensitive adhesive formulations of the instant invention exhibit excellent low temperature and ambient temperature performance as well as convertibility, it may be desirable to enhance elevated temperature performance. This may be accomplished by cross-linking techniques such as the use of electron beam (EB) radiation and ultraviolet (UV) radiation and chemical cross-linking. If employed, it is desirable that tackifying additives be substantially saturated such that all of the energy of cure goes into cross-linking of the elastomeric components of the adhesive.

In considering the relative proportions of polybutadiene containing constituents to polyisoprene containing constituents, there is shown in Table 1 the relative tangent delta contributions of the polybutadiene (PB) and polyisoprene (PI) constituents. With reference thereto, at a ratio of 0.4:1 only one glass transition temperature peak is exhibited and the tangent delta is high, indicating a high amount of energy loss in cutting any pressure-sensitive adhesive formulated from the mixture. At higher proportions of polybutadiene to polyisoprene, there are exhibited two glass transition temperature peaks and the tangent delta values are lower showing lower overall energy being required for cutting of a formulated pressure-sensitive adhesive. Data in Table 1 are based on mixtures of Solprene 1205, a block copolymer of styrene and butadiene, and Kraton 1107, a mixture, as manufactured, of SIS triblocks and SI diblocks.

**TABLE 1**

| PB / PI | PB Tg (°C) | Tan Delta Max | PI Tg (°C) | Tan Delta Max |
|---|---|---|---|---|
| 0.4 / 1.0 | -- | -- | -57 | 1.64 |
| 1.0 / 1.0 | -80 | 0.45 | -54 | 0.71 |
| 1.3 / 1.0 | -77 | 0.64 | -54 | 0.56 |
| 1.5 / 1.0 | -81 | 0.70 | -55 | 0.50 |
| 2.5 / 1.0 | -77 | 0.76 | -54 | 0.41 |
| 5.0 / 1.0 | -82 | 0.84 | -54 | 0.33 |

### Examples 1 to 10

Based on the initial findings, an experimental design was established to determine the effect of adhesive performance at various concentrations of elastomer using a normally solid tackifier (Escorez 1310 LC) and a normally liquid tackifier (Wingtack 10). The results are tabulated in Table 2 wherein RT means room temperature, PE means polyethylene, CB means cardboard, LT means looptack which is determined by an Instron machine in which a loop is placed in jaws of the Instron machine with adhesive exposed and allowed to descend at a predetermined rate to the surface of the substrate to cover an area approximately 1" by 1" and immediately thereafter removed, with a peak of force determined being reported as looptack. Ninety degree peel is measured by pressure sensitive Tape Council Test Method No. 2. Viscosity is measured by Brookfield viscometer with a thermo-cell attachment and measured with a No. 2 spindle at 10 rpm after the adhesive sample has been at 175°C for one hour. Each of the compositions or hot-melt components were compounded using a one liter sigma blade mixer, coated using a hot-melt coater onto a release liner and laminated to a 22.7 Kg (50 pounds) per ream paper face stock.

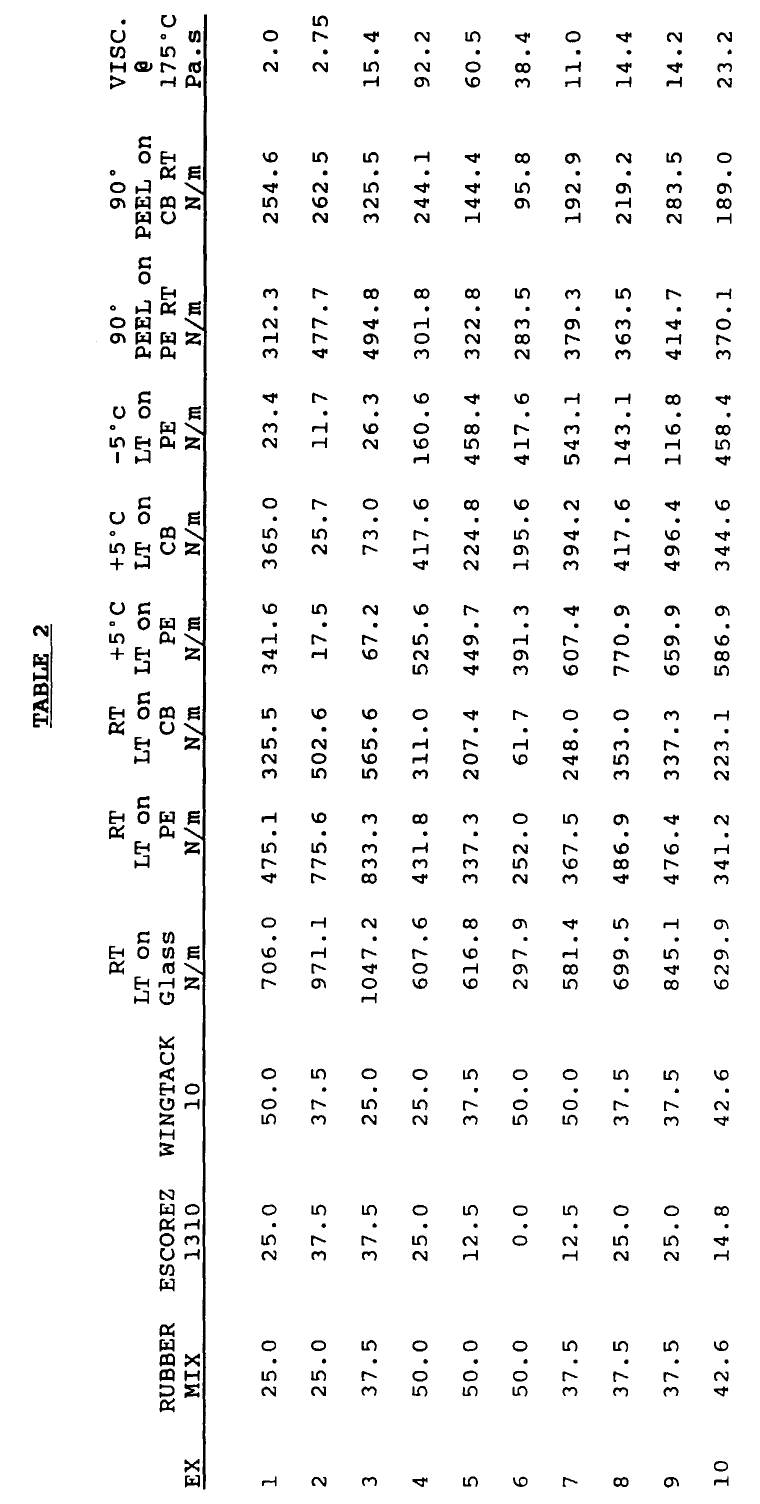

The data given in Table 2 establish as shown in FIGS. 8-10 the predicted compositions of constant looptack to polyethylene at temperatures of 23°C, 5°C and -5°C, while FIGS. 11 and 12 show predicted values of constant looptack for cardboard at 23°C and 5°C, and FIG. 13 shows predicted values of constant looptack 90° peel to cardboard. FIGS. 9 and 10, in comparison, show a reversal of looptack as the temperature decreases from 23°C to -5°C, while at 5°C show a fairly symmetrical pattern.

### Examples 11 to 16

Based on the experimental design, using an elastomeric mixture at a weight ratio of approximately 1.3:1 SB to SIS, there were formed several adhesive formulations, the composition and viscosity of which are shown in Table 3.

**TABLE 3**

| | Ex11 | Ex12 | Ex13 | Ex14 | Ex15 | Ex16 |
|---|---|---|---|---|---|---|
| Solprene 1205 | 23.4 | 18.9 | 20.0 | 21.2 | 22.3 | 22.3 |
| Kraton 1107 | 18.6 | 15.1 | 16.0 | 16.8 | 27.7 | 17.7 |
| Escorez 1310 LC | 14.6 | 32.0 | 24.0 | 24.0 | 24.0 | 20.0 |
| Wingtack 10 | 42.0 | 34.0 | 40.0 | 38.0 | 36.0 | 40.0 |
| Ethyl 330 | 0.7 | 0.7 | 0.7 | 0.7 | 0.7 | 0.7 |
| Cyanox LTDP | 0.7 | 0.7 | 0.7 | 0.7 | 0.7 | 0.7 |
| Visc. @175°C, Pa.s | 28.3 | 6.5 | 9.6 | 15.4 | 22.0 | 19.6 |
| Visc. @175°C, Pa.s | 24.2 | 10.1 | 10.8 | 14.6 | 20.8 | 17.9 |

### Control 1 and Example 17

Table 4 shows two formulations and compares the performance of an adhesive formulation based solely on SIS (Control 1) and a blend of SB and SIS (Example 17). As can be seen, looptack performance is substantially improved for the mixture of elastomers as compared to compositions based on SIS alone and the same tackifying additives. The DMS plot for Example 17 is shown in FIG. 6 in comparison to the same formulation except that the elastomer used was solely Kraton 1112 (FIG. 7)

**TABLE 4**

| Formulation | Control 1 | Example 17 |
|---|---|---|
| Solprene 1205 | 0.0 | 21.2 |
| Kraton 1112 | 38.0 | 16.8 |
| Escorez 1310 LC | 38.0 | 38.0 |
| Shellflex 371 | 24.0 | 24.0 |
| Ethyl 330 | 0.7 | 0.7 |
| Cyanox LTDP | 0.7 | 0.7 |
| | | |
| RT LT Glass, N/m | 437 | 688 |
| RT LT PE, N/m | 369 | 438 |
| RT LT CB, N/m | 293 | 325 |
| (+5°C) LT PE, N/m | 500 | 756 |
| (+5°C) LT CB, N/m | 388 | 569 |
| (-5°C) LT PE, N/m | 508 | 534 |

### Control 2 and Example 18

Table 5, by comparison, shows the looptack properties of the optimum composition of this invention (Example 18, FIG. 5) to the same composition where the elastomer is solely Kraton 1107 (Control 2 and FIG. 8). The composition of Example 18 had, as compared to Control 2, better overall properties.

The composition of Example 18 was coated on a release line and then laminated to a paper face stock and the laminate converted. It was observed that cutting was improved considerably without evidence of stringiness of adhesive during matrix stripping operations.

**TABLE 5**

| Formulation | Control 2 | Example 18 |
|---|---|---|
| Solprene 1205 | 0.0 | 21.2 |
| Kraton 1107 | 38.0 | 16.8 |
| Escorez 1310 LC | 24.0 | 24.0 |
| Wingtack 10 | 38.0 | 38.0 |
| Ethyl 330 | 0.7 | 0.7 |
| Cyanox LTDP | 0.7 | 0.7 |
| | | |
| RT LT Glass, N/m | 427 | 958 |
| RT LT PE, N/m | 335 | 495 |
| RT LT CB, N/m | 156 | 384 |
| (+5°C) LT PE, N/m | 599 | 876 |
| (+5°C) LT CB, N/m | 430 | 531 |
| (-5°C) LT PE, N/m | 781 | 301 |

## Claims

1. A pressure-sensitive adhesive comprising
a) a mixture of elastomers comprised of:
(i) a first elastomer providing a first polymerized diene component, said first elastomer exhibiting a first glass transition temperature and selected from the group consisting of polybutadiene, styrene-butadiene block copolymers, styrene-butadiene multiarmed block copolymers, and mixtures thereof,
(ii) a second elastomer providing a second polymerized diene component, said second elastomer exhibiting a second glass transition temperature greater than the first glass transition temperature, said second polymerized diene component being immiscible in the first polymerized diene component, said first and second elastomers being combined in a mixture wherein the dynamic mechanical spectrum of the mixture exhibits a first glass transition temperature and a first value of tangent delta which is attributed to the first polymerized diene component and a second glass transition temperature and second value of tangent delta which is attributed to the second polymerized diene component, said second glass transition temperature being higher than the first glass transition temperature; and said mixture of elastomers is combined with:
b) a tackifying system comprising at least one tackifier which is preferentially soluble in the second polymerized diene component and is present in an amount of 50 to 80% by weight of the total weight of the mixture of immiscible elastomers and tackifying system, whereby to cause the dynamic mechanical spectrum of the resultant mixture of elastomers to exhibit an increase in the second glass transition temperature and an increase in the difference between the first and second glass transition temperatures and an increase in the value of tangent delta determined at the second glass transition temperature.

2. A pressure-sensitive adhesive as claimed in claim 1 in which the second polymerized diene component is a polymerized isoprene component.

3. A pressure-sensitive adhesive as claimed in claim 1 or 2 in which the second elastomer is natural rubber, synthetic polyisoprene, styrene-isoprene-styrene block copolymers, styrene-isoprene block copolymers, styrene-isoprene multiarmed block copolymers, or mixtures thereof.

4. A pressure-sensitive adhesive as claimed in claim 2 or 3 in which the tackifying system is preferentially soluble in the polyisoprene component and selected from the group consisting of normally solid polymerized C₅ or C₆ diene tackifying resins, normally solid hydrogenated aromatic hydrocarbons, normally solid saturated cycloaliphatic hydrocarbons, and mixtures thereof.

5. A pressure-sensitive adhesive as claimed in any of claims 1 to 4 in which the weight ratio of the first elastomer to the second elastomer is about 0.5:1 to about 1.5:1.

6. A pressure-sensitive adhesive as claimed in any of claims 1 to 5 in which the mixture of elastomers is present in an amount of from about 20% to about 50% by weight based on the total weight of the mixture of elastomers and tackifying system.

7. A pressure-sensitive adhesive as claimed in claim 1 in which:
a) the first elastomer is a styrene-butadiene block copolymer, the second elastomer is a styrene-isoprene-styrene block copolymer or a mixture of a styrene-isoprene-styrene block copolymer and a styrene-isoprene block copolymer, said first and second elastomers provided in a weight ratio of 1:1 to 1.5:1; and
b) a tackifying system is present in an amount of from about 60% to about 70% by weight based on the weight of the first and second elastomers, said tackifying system being preferentially soluble in the second elastomer and comprising normally solid polymerized C₅ or C₆ diene resin.

8. A pressure-sensitive adhesive as claimed in claim 4 or claim 7 in which the tackifying system further comprises a compound which is a normally liquid polymerized C₅ or C₆ tackifying resin, a plasticizer oil, or a mixture thereof.

9. A pressure-sensitive adhesive as claimed in any one of the preceding claims in which the weight ratio of the first elastomer to the second elastomer is 1.3:1.

10. A pressure-sensitive adhesive according to any one of the preceding claims, wherein the tackifier system comprises solid tackifiers obtained by polymerization of a stream of aliphatic petroleum derivatives in the form of dienes and mono-olefins containing 5 or 6 carbon atoms and having a softening point of 95°C.

11. A pressure-sensitive adhesive according to any one of the preceding claims, wherein the tackifier system further includes a second tackifier selected from the group consisting of rosin, rosin esters, and polyterpenes.

## Patentansprüche

1. Haftklebstoff bestehend aus oder enthaltend
a) ein Elastomerengemisch aus:
(i) einem ersten Elastomer, das eine erste polymerisierte Dienkomponente bereitstellt, wobei dieses erste Elastomer eine erste Glasüberganstemperatur hat und aus der Gruppe bestehend aus Polybutadien, Styrol-Butadien-Blockcopolymeren, mehrfach verzweigten Styrol-Butadien-Blockcopolymeren und deren Gemischen ausgewählt ist,
(ii) einem zweiten Elastomer, das eine zweite polymerisierte Dienkomponente bereitstellt, wobei dieses zweite Elastomer eine zweite Glasübergangstemperatur hat, die höher als die erste ist, und die zweite polymerisierte Dienkomponente mit der ersten polymerisierten Dienkomponente nicht mischbar ist, und erstes und zweites Elastomer in einem Gemisch vereinigt sind, dessen mechanisch-dynamisches Spektrum eine erste Glasübergangstemperatur und einen ersten Tangensdeltawert hat, der der ersten polymerisierten Dienkomponente zugeordnet ist, sowie eine zweite Glasübergangstemperatur und einen zweiten Tangensdeltawert, der der zweiten polymerisierten Dienkomponente zugeordnet ist, wobei die zweite Glasübergangstemperatur höher als die erste ist; und das Elastomerengemisch kombiniert ist mit:
b) einem klebrigmachenden System, bestehend aus oder enthaltend mindestens einen Klebrigmacher, der vorzugsweise in der zweiten polymerisierten Dienkomponente löslich ist und in einer Menge von 50 bis 80 Gewichtsprozent des Gesamtgewichts der Mischung aus nichtmischbaren Elastomeren und klebrigmachendem System vorliegt, wodurch das dynamisch-mechanische Spektrum des resultierenden Elastomerengemischs einen Anstieg der zweiten Glasübergangstemperatur und einen Anstieg der Differenz zwischen erster und zweiter Glasübergangstemperatur sowie einen Anstieg des Tangensdeltawerts bezogen auf die zweite Glasübergangstemperatur aufweist.

2. Haftklebstoff nach Anspruch 1, worin die zweite polymerisierte Dienkomponente eine polymerisierte Isoprenkomponente ist.

3. Haftklebstoff nach Anspruch 1 oder 2, worin das zweite Elastomer Naturkautschuk, synthetisches Polyisopren, Styrol-Isopren-Styrol-Blockcopolymere, Styrol-Isopren-Blockcopolymere, mehrfach verzweigte Styrol-Isopren-Blockcopolymere sowie deren Gemische ist.

4. Haftklebstoff nach Anspruch 2 oder 3, worin das klebrigmachende System bevorzugt in der Polyisoprenkomponente löslich und ausgewählt ist aus der Gruppe bestehend aus normalerweise festen polymerisierten C₅- oder C₆-Dien-Klebrigmacherharzen, normalerweise festen hydrierten aromatischen Kohlenwasserstoffen, normalerweise festen gesättigten cycloaliphatischen Kohlenwasserstoffen sowie deren Gemischen.

5. Haftklebstoff nach einem der Ansprüche 1 bis 4, worin das Gewichtsverhältnis vom ersten zum zweiten Elastomer ca. 0,5 : 1 bis ca. 1,5 : 1 beträgt.

6. Haftklebstoff nach einem der Ansprüche 1 bis 5, worin das Elastomerengemisch in einer Menge von ca. 20 bis ca. 50 Gewichtsprozent vorliegt, bezogen auf das Gesamtgewicht der Mischung aus Elastomeren und klebrigmachendem System.

7. Haftklebstoff nach Anspruch 1, worin:
a) das erste Elastomer ein Styrol-Butadien-Blockcopolymer, das zweite Elastomer ein Styrol-Isopren-Styrol-Blockcopolymer oder ein Gemisch aus einem Styrol-Isopren-Styrol-Blockcopolymer und einem Styrol-Isopren-Blockcopolymer ist, wobei das erste und zweite Elastomer in einem Gewichtsverhältnis von 1 : 1 bis 1,5 : 1 bereitgestellt werden; und
b) ein klebrigmachendes System in einer Menge von ca. 60 bis ca. 70 Gewichtsprozent anwesend ist, bezogen auf das Gewicht des ersten und zweiten Elastomers, wobei das klebrigmachende System bevorzugt in dem zweiten Elastomer löslich ist und aus normalerweise festem, polymerisiertem C₅- oder C₆-Dienharz besteht oder dieses enthält.

8. Haftklebstoff nach Anspruch 4 oder 7, worin das klebrigmachende System außerdem eine Verbindung enthält, die ein normalerweise flüssiges, polymerisiertes C₅- oder C₆-Klebrigmacherharz, ein Weichmacheröl oder ein Gemisch daraus ist.

9. Haftklebstoff nach einem der vorherigen Ansprüche, worin das Gewichtsverhältnis von erstem zu zweitem Elastomer 1,3 : 1 beträgt.

10. Haftklebstoff nach einem der vorherigen Ansprüche, worin das klebrigmachende System feste Klebrigmacher enthält oder daraus besteht, die durch Polymerisation eines Stroms aliphatischer Mineralölderivate in Form von Dienen und Monoolefinen mit 5 oder 6 Kohlenstoffatomen und einem Erweichungspunkt von 95 °C erhalten werden.

11. Haftklebstoff nach einem der vorherigen Ansprüche, worin das klebrigmachende System außerdem einen zweiten Klebrigmacher aufweist, der aus der Gruppe bestehend aus Naturharz, Naturharzestern und Polyterpenen ausgewählt ist.

## Revendications

1. Adhésif sensible à la pression comprenant
a) un mélange d'élastomères constitué de :
(i) un premier élastomère formant un premier composant diène polymérisé, ledit premier élastomère présentant une première température de transition vitreuse et étant choisi dans la classe formée par le polybutadiène, les copolymères séquencés styrène-butadiène, les copolymères séquencés styrène-butadiène à branches multiples, et leurs mélanges,
(ii) un second élastomère formant un second composant diène polymérisé, ledit second élastomère présentant une seconde température de transition vitreuse supérieure à la première température de transition vitreuse, ledit second composant diène polymérisé étant non miscible au premier composant diène polymérisé, lesdits premier et second élastomères étant réunis en un mélange dans lequel le spectre mécanique dynamique du mélange présente une première température de transition vitreuse et une première valeur de tangente delta qui sont attribuées au premier composant diène polymérisé et une seconde température de transition vitreuse et une seconde valeur de tangente delta qui sont attribuées au second composant diène polymérisé, ladite seconde température de transition vitreuse étant supérieure à la première température de transition vitreuse ; et ledit mélanges d'élastomères est associé à :
b) un système d'adhésivité comprenant au moins un agent d'adhésivité qui est préférentiellement soluble dans le second composant diène polymérisé et qui est présent en une quantité de 50 à 80 % en poids du poids total du mélange d'élastomères non miscibles et du système d'adhésivité, de sorte que le spectre mécanique dynamique du mélange d'élastomères résultant présente une élévation de la seconde température de transition vitreuse et un accroissement de la différence entre les première et seconde températures de transition vitreuse et une augmentation de la valeur de tangente delta déterminée à la seconde température de transition vitreuse.

2. Adhésif sensible à la pression tel que revendiqué dans la revendication 1, dans lequel le second composant diène polymérisé est un composant isoprène polymérisé.

3. Adhésif sensible à la pression tel que revendiqué dans la revendication 1 ou 2, dans lequel le second élastomère est du caoutchouc naturel, du polyisoprène synthétique, des copolymères séquencés styrène-isoprène-styrène, des copolymères séquencés styrène-isoprène, des copolymères séquencés styrène-isoprène à branches multiples, ou des mélanges d'entre eux.

4. Adhésif sensible à la pression tel que revendiqué dans la revendication 2 ou 3, dans lequel le système d'adhésivité est préférentiellement soluble dans le composant polyisoprène et choisi dans la classe formée par les résines d'adhésivité à base de diène en C₅ ou C₆ polymérisé normalement solides, les hydrocarbures aromatiques hydrogénés normalement solides, les hydrocarbures cycloaliphatiques saturés normalement solides, et leurs mélanges.

5. Adhésif sensible à la pression tel que revendiqué dans l'une quelconque des revendications 1 à 4, dans lequel le rapport en poids du premier élastomère au second élastomère est d'environ 0,5:1 à environ 1,5:1.

6. Adhésif sensible à la pression tel que revendiqué dans l'une quelconque des revendications 1 à 5, dans lequel le mélange d'élastomères est présent en une quantité d'environ 20 % à environ 50 % en poids par rapport au poids total du mélange d'élastomères et du système d'adhésivité.

7. Adhésif sensible à la pression tel que revendiqué dans la revendication 1, dans lequel :
a) le premier élastomère est un copolymère séquencé styrène-butadiène, le second élastomère est un copolymère séquencé styrène-isoprène-styrène ou un mélange d'un copolymère séquencé styrène-isoprène-styrène et d'un copolymère séquencé styrène-isoprène, lesdits premier et second élastomères étant présents en un rapport en poids de 1:1 à 1,5:1 ; et
b) un système d'adhésivité est présent en une quantité d'environ 60 % à environ 70 % en poids par rapport au poids des premier et second élastomères, ledit système d'adhésivité étant préférentiellement soluble dans le second élastomère et comprenant une résine de diène en C₅ ou C₆ polymérisé normalement solide.

8. Adhésif sensible à la pression tel que revendiqué dans la revendication 4 ou la revendication 7, dans lequel le système d'adhésivité comprend, de plus, un composé qui est une résine d'adhésivité à base de diène en C₅ ou C₆ polymérisé normalement liquide, une huile plastifiante ou un mélange d'entre elles.

9. Adhésif sensible à la pression tel que revendiqué dans l'une quelconque des revendications précédentes, dans lequel le rapport en poids du premier élastomère au second élastomère est de 1,3:1.

10. Adhésif sensible à la pression selon l'une quelconque des revendications précédentes, dans lequel le système d'adhésivité comprend des agents d'adhésivité solides obtenus par polymérisation d'un courant de dérivés aliphatiques du pétrole sous la forme de diènes et mono-oléfines contenant 5 ou 6 atomes de carbone et ayant un point de ramollissement de 95°C.

11. Adhésif sensible à la pression selon l'une quelconque des revendications précédentes, dans lequel le système d'adhésivité comprend, de plus, un second agent d'adhésivité choisi dans la classe formée par la colophane, les esters de la colophane et les polyterpènes.
